# EUROPEAN PATENT APPLICATION

(11) **EP 4 841 810 A1**
(43) Date of publication of application: **18.11.2026**
(21) Application number: 24926465.6
(22) Date of filing: 01.03.2024
(51) Int. Cl.: H01M 50/55

(54) **BATTERY CELL, BATTERY, ELECTRICAL APPARATUS, AND ENERGY STORAGE APPARATUS**

(71) Applicant: Contemporary Amperex Technology Co., Limited, Ningde, Fujian 352100 (CN)
(72) Inventor: ZHAO, Fenggang, Ningde, Fujian 352100 (CN); JIN, Haizu, Ningde, Fujian 352100 (CN); WU, Kai, Ningde, Fujian 352100 (CN); CHEN, Wei, Ningde, Fujian 352100 (CN); NIE, Xianzhen, Ningde, Fujian 352100 (CN); ZHENG, Yulian, Ningde, Fujian 352100 (CN); ZHOU, Wenlin, Ningde, Fujian 352100 (CN)
(74) Representative: Kraus & Lederer PartGmbB
(86) International application number: PCT/CN2024/079701
(87) International publication number: WO 2025/179589

(57) **Abstract**

A battery cell (121), a battery (10), an electrical apparatus, and an energy storage apparatus (200). The battery cell (121) comprises: a casing (1211), the casing (1211) having a first wall (1211a); a first pole (1213a) and a second pole (1213b), which are disposed on the first wall (1211a), wherein the first pole (1213a) and the second pole (1213b) are arranged in a first direction, and in the first direction, the farthest distance between the outer contours of the first pole (1213a) and the second pole (1213b) is less than one-half the size of the first wall (1211a).

## Description

### TECHNICAL FIELD

The present disclosure relates to the field of battery technologies, and in particular, to a battery cell, a battery, an electrical apparatus, and an energy storage apparatus.

### BACKGROUND

With the promotion and widespread adoption of green development concepts, new energy batteries are being increasingly used in both daily life and industry. For example, new energy vehicles equipped with batteries have been widely used. In addition, batteries are also increasingly used in the field of energy storage or the like.

To accommodate various battery grouping scenarios, battery cells of different shapes are available in the industry, for example, cylindrical battery cells, prismatic battery cells, and blade-shaped battery cells. For blade-shaped battery cells, particularly blade-shaped battery cells having a relatively long length, the resistance to deformation is relatively poor. Therefore, how to improve the strength of battery cells with a relatively long length, particularly the strength of long blade-shaped battery cells (also referred to as long-blade battery cells), has become one of the research directions in the field.

### SUMMARY

In view of this, the present disclosure is intended to provide a battery cell, a battery, an electrical apparatus and an energy storage apparatus, which can improve strength of a casing of the battery.

To achieve the above objective, the present disclosure adopts the following technical solutions.

According to a first aspect of the present disclosure, a battery cell is provided, which comprises: a casing, having a first wall; and a first pole and a second pole, which are disposed on the first wall, where the first pole and the second pole are arranged in a first direction, and in the first direction, the farthest distance between the outer contours of the first pole and the second pole is less than one-half the size of the first wall.

Since both the first pole and the second pole are disposed on the first wall and the farthest distance between the outer contours of the first pole and the second pole is less than one-half the size of the first wall, the first pole and the second pole are disposed in a concentrated manner relative to the entire first wall such that through mutual cooperation of a two-pole structure, strength of a pole disposition region in the first wall can be improved, which is beneficial to reducing a risk of deformation of the pole disposition region. In addition, by disposing the first pole and the second pole in a concentrated manner, it is beneficial to fully utilizing other space of the first wall and processing the pole and an attached component in a concentrated manner during manufacturing and maintenance.

In some embodiments of the battery cell, in the first direction, the farthest distance between the outer contours of the first pole and the second pole does not exceed 40% of the size of the first wall.

By setting the farthest distance between the outer contours of the first pole and the second pole to not exceed 40% of the overall length size of the first wall, a mutual cooperation effect of the first pole and the second pole can be reinforced, which is more beneficial to improving strength of the pole disposition region in the first wall and reducing a risk of bending and deformation.

In some embodiments of the battery cell, the first direction is consistent with the length direction of the first wall, and the first pole and the second pole are arranged spaced apart from each other in the length direction.

In the length direction of the first wall, the first wall has a greater risk of deformation or a larger deformation amount. By disposing the first pole and the second pole in the length direction in a concentrated manner, it is beneficial to reducing a risk of deformation of the pole disposition region. In addition, larger space may be reserved in the length direction of the first wall, which is beneficial to fully utilizing other space of the first wall.

In some embodiments of the battery cell, the first direction is consistent with the width direction of the first wall, and the first pole and the second pole are arranged spaced apart from each other in the width direction.

By disposing the first pole and the second pole in the width direction, strength of the pole disposition region in the first wall can be improved, which is beneficial to reducing a risk of deformation of the first wall. In addition, by disposing the first pole and the second pole in the width direction in a concentrated manner, it is more beneficial to fully utilizing other space of the first wall.

In some embodiments of the battery cell, the first pole and the second pole are both disposed on the same side of the first wall in the first direction, or the first pole and the second pole are both disposed close to a middle position of the first wall in the first direction.

By disposing the first pole and the second pole on the same side in the length direction or the width direction, strength of the pole disposition region in the first wall can be improved and it is beneficial to utilizing another region of the first wall. In addition, cooperation with another wall surface at an edge may be performed, thereby improving assembly convenience. Particularly, by disposing the first pole and the second pole close to the middle position in the length direction, a central region in which deformation is more likely to occur can be reinforced, and it is also beneficial to improving overall strength of the first wall in a more balanced manner.

In some embodiments of the battery cell, the first wall has a boss, the boss is protruding relative to the first wall in the direction away from the first wall, and at least one of the first pole and the second pole is disposed on the boss.

By disposing the boss for the pole, strength of the first wall can be further improved through the boss, thereby reducing a risk of deformation or an amount of deformation.

In some embodiments of the battery cell, the number of bosses is one; and the boss is disposed on one side of the first wall in the first direction, or the boss is disposed at a middle position of the first wall in the first direction.

By disposing the first pole and/or the second pole on the boss, strength of the first wall can be further improved through cooperation between the boss and the pole.

In some embodiments of the battery cell, the number of bosses is two, one of the bosses is disposed with the first pole, the other boss is disposed with the second pole, and the two bosses are arranged in the first direction.

By respectively disposing the first pole and the second pole on the two bosses, it is beneficial to improving flexibility in arranging the bosses and to suppressing space occupied by the bosses.

In some embodiments of the battery cell, the two bosses are disposed spaced apart from each other close to a middle position of the first wall, or the two bosses are disposed on the same side of the first wall in the first direction.

Strength of the first wall of the battery can be improved through the two bosses and the poles disposed on the bosses.

In some embodiments of the battery cell, the projection area of the boss on the first wall in the thickness direction of the first wall accounts for 10% to 30% of the area of the first wall.

By disposing a boss with an appropriate size, disposition of the poles, improvement of strength of the first wall, and suppression of occupied space can be balanced.

In some embodiments of the battery cell, the size of the boss in a second direction does not exceed 500 mm, where in a plane in which the first wall is located, the second direction is perpendicular to the first direction; and/or the protruding height size of the boss relative to the first wall does not exceed 300 mm.

By disposing the boss with an appropriate size, disposition of the poles, improvement of strength of the first wall, and suppression of occupied space can be balanced.

In some embodiments of the battery cell, the size of the boss in the second direction is in the range of 100 mm to 400 mm; and/or the height size of the boss is in the range of 20 mm to 100 mm.

By disposing the boss with an appropriate size, disposition of the poles, improvement of strength of the first wall, and suppression of occupied space can be balanced.

In some embodiments of the battery cell, the size of the first wall in the length direction is greater than or equal to 350 mm.

Disposing the first pole and the second pole in a concentrated manner is more beneficial to improving strength of the first wall of a battery having a relatively large length.

In some embodiments of the battery cell, the distance between the outer contours of the first pole and the second pole and an end edge of the first wall in the first direction is not less than 5% of the size of the first wall in the first direction.

By limiting the distance between the poles and the end edge of the first wall in the length direction, it is beneficial to improving assembly convenience by utilizing a restraining effect of another wall surface at the end edge.

In some embodiments of the battery cell, the distance between the outer contours of the first pole and the second pole and the end edge of the first wall in the first direction is in the range of 8.75 mm to 600 mm.

Accordingly, the pole can be arranged at an appropriate position on the first wall, thereby ensuring reliable electrical conduction while also enabling a reinforcing effect on the first wall.

In the battery cells of some embodiments, the first wall is an end cap of the battery cell; the first wall is a wall having the largest area of the casing; or the first wall is a wall of the casing opposite to the end cap.

Accordingly, the pole can be disposed in the casing of the battery with greater positional flexibility. Even when the wall of the casing on which the poles are to be disposed has a relatively high risk of deformation, a deformation amount can be reduced by centrally disposing the poles.

A second aspect of the present disclosure provides a battery, comprising: a casing body, and a plurality of battery cells according to the first aspect of the present disclosure.

Accordingly, the battery having the battery cells with the casing that is not prone to deformation or has a relatively small deformation amount can be provided.

In some embodiments of the battery, a first direction is consistent with the length direction of the battery cell, and the plurality of battery cells are arranged in the width direction of a first wall such that a first pole and a second pole are separately arranged in the width direction of the first wall.

Accordingly, the battery cells can be easily grouped, and the first pole and the second pole can be easily connected.

In some embodiments of the battery, the casing body comprises a casing wall facing the first wall, and an accommodating portion is formed at the side of the casing wall facing the first wall. The battery further comprises a busbar and an electrical assembly. The busbar is configured to connect one of the first pole and the second pole of one battery cell to one of the first pole and the second pole of another battery cell. The electrical assembly comprises at least one of a sampling structure, a battery management system, a relay, and a high-voltage distribution unit. The accommodating portion accommodates at least part of the first pole, the second pole, the busbar, and the electrical assembly.

Accordingly, by forming the accommodating portion between the casing wall facing the first wall and the first wall of the battery cell, and accommodating the poles, busbar, electrical assembly, and the like, in whole or in part within the accommodating portion, the overall volume of the casing body of the battery can be reduced, thereby improving volume utilization efficiency of the casing body of the battery.

In some embodiments of the battery, a protruding portion is disposed on the casing wall facing the first wall. The protruding portion protrudes from the casing wall in the direction away from the first wall, and the accommodating portion comprises space at the side of the protruding portion facing the first wall.

Accordingly, by disposing the protruding portion on the casing body to form the accommodating portion, and accommodating all or part of the poles, the busbar, and the electrical assembly in the accommodating portion, the overall volume of the casing body of the battery can be further reduced, thereby further improving volume utilization efficiency of the casing body of the battery.

In some embodiments of the battery, the battery further comprises a heat exchange assembly, and the heat exchange assembly is disposed on the first wall of each battery cell, and is configured to exchange heat with each battery cell. In the thickness direction of the first wall, projections of the first pole and the second pole on the first wall do not overlap with the projection of the heat exchange assembly on the first wall.

Accordingly, heat exchange can be achieved in a region other than a pole disposition region on the first wall of the battery cell, which is beneficial to suppressing the overall volume of the casing body of the battery and improving volume utilization efficiency of the casing body of the battery.

In some embodiments of the battery, the first walls of the plurality of battery cells form a first surface. The first surface has a first region and a second region. The first pole and the second pole are disposed in the first region, and the heat exchange assembly is disposed in the second region. The number of second regions is two, and the two second regions are respectively located at two sides of the first region.

By arranging the battery cells such that the first pole and the second pole are concentrated in the first region, and disposing heat exchange assemblies on both sides of the first region, it is beneficial to heat exchange with the battery cells as a whole, and further improving strength of the first wall of the battery cell.

In some embodiments of the battery, the first walls of the plurality of battery cells form a first surface. The first surface has a first region and a second region. The first pole and the second pole are disposed in the first region, and the heat exchange assembly is disposed in the second region. The number of first regions is two, and the second region is located between the two first regions.

By arranging the battery cells such that the first pole and the second pole are located on both sides of the second region, and disposing the heat exchange assembly in the second region between the two first regions where the poles are disposed, it is beneficial to heat exchange with the battery cells, and improving strength of the first wall of the battery cell.

In some embodiments of the battery, the area of the second region is greater than the area of the first region.

Accordingly, by disposing the first pole and the second pole and arranging the battery cells such that the second region without a pole has a larger area, larger space can be provided for disposing the heat exchange assembly.

In some embodiments of the battery, the heat exchange assembly comprises: a heat exchange plate; and an adhesive layer disposed on the side of the heat exchange plate closer to the first wall, where the heat exchange plate is bonded to the first wall of the battery cell through the adhesive layer; or disposed on the side of the heat exchange plate away from the first wall, where the heat exchange plate is bonded to the casing wall through the adhesive layer.

Since the heat exchange assembly is bonded to the first wall of the battery cell and/or the casing wall, it is beneficial to improving strength of the first wall of the battery cell, and further reducing a deformation risk or a deformation amount.

In some embodiments of the battery, the distance between the top end of the first pole and the second pole in the thickness direction of the first wall and the first wall is not less than the height of the heat exchange assembly in the thickness direction of the first wall.

Since the heat exchange assembly does not exceed the poles in the thickness direction of the first wall, it is beneficial to suppressing the overall volume of the battery and improving volume utilization efficiency of the battery.

In some embodiments of the battery, a through hole is disposed in the casing wall of the casing body facing the first wall of the battery cell. The casing wall disposed with the through hole is used as a first casing wall. In the thickness direction of the first casing wall, projections of the first pole and the second pole on the first casing wall at least partially fall within the range of the through hole.

Since the first pole and the second pole are disposed in a concentrated manner, inspection and maintenance operations of the first pole and the second pole can be easily performed by disposing the through hole in the first casing wall.

In some embodiments of the battery, the protruding portion protruding in the direction away from the battery cell is disposed on the first casing wall. The through hole is disposed in the protruding portion. The protruding portion is integrally formed with the first casing wall, or detachably formed relative to the first casing wall.

Since the first casing wall is disposed with the protruding portion and the through hole is formed in the protruding portion, inspection and maintenance operations can be performed through the through hole on the first pole, the second pole, and another component extending into the protruding portion.

In some embodiments of the battery, the battery further comprises a closing cover configured to close the through hole.

Accordingly, the through hole can be closed by the closing cover when not in use, thereby preventing foreign substances from entering the casing body of the battery.

In some embodiments of the battery, the battery further comprises the busbar and the electrical assembly. The busbar is configured to connect one of the first pole and the second pole of one battery cell to one of the first pole and the second pole of another battery cell. The electrical assembly comprises at least one of the sampling structure, the battery management system, the relay, and the high-voltage distribution unit. In the thickness direction of the first casing wall, the projections of the busbar and the electrical assembly on the first casing wall at least partially fall within the range of the through hole.

By disposing the protruding portion on the casing body of the battery to form the accommodating portion, and accommodating the poles, the busbar, the electrical assembly, and the like in the accommodating portion, the overall volume of the casing body of the battery can be reduced, it is beneficial to improving volume utilization efficiency of the casing body of the battery, and performing inspection and maintenance on more components through the through hole.

A third aspect of the present disclosure provides an electrical apparatus. The electrical apparatus comprises a plurality of battery cells provided in the first aspect above, or the battery provided in the second aspect above, and the battery cells or the battery serve as a power supply of a vehicle.

Accordingly, the electrical apparatus disposed with the battery having the battery cells with the casing that is not prone to deformation or has a relatively small deformation amount, which is beneficial to reducing maintenance time.

In some embodiments of the present disclosure, the electrical apparatus comprises a vehicle.

Accordingly, the vehicle disposed with the battery having the battery cells with the casing that is not prone to deformation or has a relatively small deformation can be provided, which is beneficial to reducing maintenance time.

A fourth aspect of the present disclosure provides an energy storage apparatus. The energy storage apparatus comprises the plurality of battery cells provided in the first aspect above, or the battery provided in the second aspect above, and the battery cells or the battery are configured to be capable of storing electrical energy and supplying electrical energy.

Accordingly, the energy storage apparatus disposed with the battery having the battery cells with the casing that is not prone to deformation or has a relatively small deformation can be provided, which is beneficial to reducing maintenance time.

### BRIEF DESCRIPTION OF THE DRAWINGS

FIG. 1 is a schematic diagram of a structure of a vehicle according to an embodiment of the present disclosure;
FIG. 2 is a schematic diagram of a battery cell according to an embodiment of the present disclosure;
FIG. 3 is another schematic diagram of a battery cell according to an embodiment of the present disclosure;
FIG. 4 is still another schematic diagram of a battery cell according to an embodiment of the present disclosure;
FIG. 5 is a schematic diagram of a battery cell with a boss according to an embodiment of the present disclosure;
FIG. 6 is another schematic diagram of a battery cell with a boss according to an embodiment of the present disclosure;
FIG. 7 is still another schematic diagram of a battery cell with a boss according to an embodiment of the present disclosure;
FIG. 8 is yet another schematic diagram of a battery cell with a boss according to an embodiment of the present disclosure;
FIG. 9 is an exploded perspective schematic diagram of a battery cell according to an embodiment of the present disclosure;
FIG. 10 is an exploded perspective schematic diagram of a battery cell with a boss according to an embodiment of the present disclosure;
FIG. 11 is a top view schematic diagram of a battery cell according to an embodiment of the present disclosure;
FIG. 12 is another top view schematic diagram of a battery cell according to an embodiment of the present disclosure;
FIG. 13 is a front view schematic diagram of a battery cell according to an embodiment of the present disclosure;
FIG. 14 is a front view schematic diagram of a battery cell with a boss according to an embodiment of the present disclosure;
FIG. 15 is an exploded perspective schematic diagram of a battery according to an embodiment of the present disclosure;
FIG. 16 is a schematic diagram of a partial structure of the battery shown in FIG. 15;
FIG. 17 is another perspective schematic diagram of a battery according to an embodiment of the present disclosure;
FIG. 18 is a schematic cross-sectional diagram taken along line A-A in FIG. 17;
FIG. 19 is an enlarged schematic diagram of a portion B in FIG. 18;
FIG. 20 is still another exploded perspective schematic diagram of a battery according to an embodiment of the present disclosure;
FIG. 21 is a schematic diagram of a structure of a seat and a battery in a vehicle according to an embodiment of the present disclosure; and
FIG. 22 is a schematic diagram of a structure of an energy storage apparatus according to an embodiment of the present disclosure.

### Description of numeral numbers

100: vehicle; 10: battery; 11: casing body; 111a: casing accommodating cavity; 111b: accommodating portion; 111: casing wall; 1111: protruding portion; 1112: closing cover; 1113: through hole; 120: first surface; 120a: first region; 120b: second region; 121: battery cell; 1211: casing; 1211a: first wall; 1211b: housing body; 1213a: first pole; 1213b: second pole; 1214: boss; 1216: electrode assembly; 1217: tab; 122: busbar; 123: electrical assembly; 14: heat exchange plate; 15: first adhesive layer; 16: second adhesive layer; 20: seat; 200: energy storage apparatus; 201: bracket.

### DETAILED DESCRIPTION OF PREFERRED EMBODIMENTS

It should be noted that the embodiments in the present disclosure and the technical features in the embodiments may be combined with each other without conflict, and the detailed descriptions in specific embodiments should be understood as an explanation of the purpose of the present disclosure, and should not be regarded as an improper limitation to the present disclosure.

Unless otherwise defined, all technical and scientific terms used herein have the same meaning as commonly understood by those skilled in the art to which the present disclosure belongs. The terms used in the specification herein are merely for the purpose of describing specific embodiments and are not intended to limit the present disclosure. The terms "include", "be provided with", and any other variants thereof in the specification in the disclosure and accompanying drawings are intended to cover a non-exclusive inclusion.

Currently, new energy batteries are becoming more and more widely used in life and industry. New energy batteries are used not only in energy storage power systems such as hydropower, thermal power, wind power, and solar power plants, but also widely used in electric vehicles such as electric bicycles, electric motorcycles, and electric automobiles, as well as aerospace, and many other fields.

To accommodate various battery grouping scenarios, battery cells of different shapes are available in the industry, for example, cylindrical battery cells, prismatic battery cells, and blade-shaped battery cells. For blade-shaped battery cells, particularly blade-shaped battery cells having a relatively long length (also referred to as long-blade battery cells), because a casing of the blade-shaped battery cell has a wall surface with a relatively long span in the length direction, the wall surfaces have poor deformation resistance and are prone to deformation. In the related art, positive and negative poles of a battery cell are respectively disposed close to two end portions of an end cap extending in the length direction of the battery cell, which results in a risk that a relatively long middle span is prone to deformation. In addition, pole positions are protruding portions of the battery cell and are more subjected to external forces, which also results in insufficient strength of a pole disposition region and a tendency to deformation. Therefore, how to improve the strength of battery cells with a relatively long length, particularly the strength (deformation resistance capability) of long blade-shaped battery cells is one of research directions in the field.

Through research, by centrally disposing positive and negative poles on a relatively long wall surface or an end cap of a casing of a battery cell, and through cooperation between the two poles, the strength of the wall surface or the end cap (particularly a pole disposition region) can be reinforced such that deformation can be suppressed.

Based on such a technical concept, the present disclosure provides a battery cell, which includes a casing having a first wall, and a first pole and a second pole disposed on the first wall, where the first pole and the second pole are arranged in a first direction, and in the first direction, the farthest distance between the outer contours of the first pole and the second pole is less than one-half the size of the first wall.

Since both the first pole and the second pole are disposed on the first wall, and the farthest distance between the outer contours of the first pole and the second pole is less than one-half the size of the first wall, the first pole and the second pole are arranged in a concentrated manner relative to the entire first wall. Therefore, through cooperation of a two-pole structure, the strength of a pole disposition region in the first wall can be improved, which is beneficial to reducing a risk of deformation of the first wall (particularly the pole disposition region).

The battery cell in the present disclosure may be, but not limited to, used in an electrical apparatus such as a vehicle, a ship, or an aircraft. A power supply system of the electrical apparatus can be composed of the battery cell, the battery, and the like in the present disclosure.

The present disclosure provides an electrical apparatus using a battery as a power supply. The electrical apparatus may be, but is not limited to, a mobile phone, a tablet computer, a notebook computer, an electric toy, an electric tool, a battery-powered vehicle, an electric vehicle, a ship, a spacecraft, etc. The electric toy may include a stationary or mobile electric toy, such as a game machine, an electric car toy, an electric ship toy, an electric airplane toy, and the like, and the spacecraft may be an airplane, a rocket, a space shuttle, a spaceship, etc.

For ease of description, the following embodiments are described by taking, as an example, an electrical apparatus, as a vehicle 100, in an embodiment of the present disclosure.

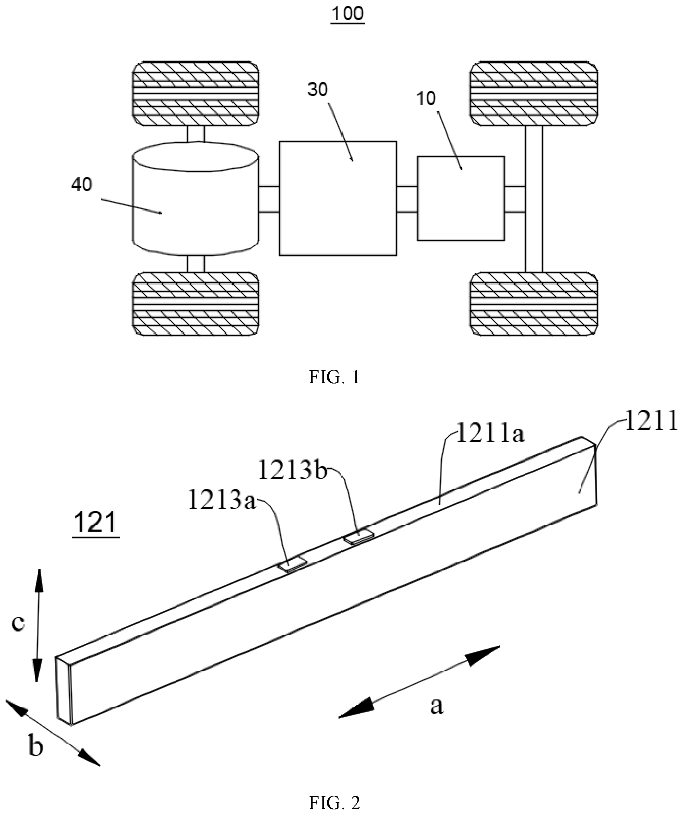

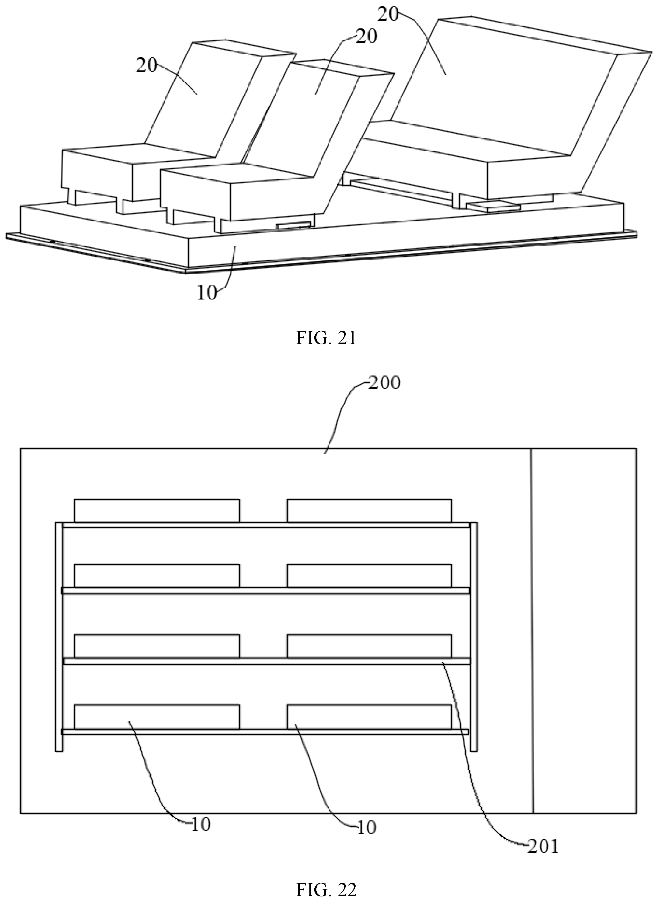

FIG. 1 is a schematic diagram of a structure of a vehicle 100 according to one embodiment of the present disclosure. The vehicle 100 may be a fuel vehicle, a gas vehicle, or a new energy vehicle, and the new energy vehicle may be a battery electric vehicle, a hybrid vehicle, or a range-extended electric vehicle. As shown in FIG. 21, a battery 10 is disposed inside the vehicle 100, and the battery 10 may be disposed at the bottom, head, or tail of the vehicle 100. The battery 10 may be configured to power the vehicle 100. For example, the battery 10 may be used as an operating power supply of the vehicle 100. The vehicle 100 may further include a controller and a motor, where the controller is configured to control the battery 10 to power the motor, for example, for a working power requirement of the vehicle 100 during starting, navigating, and driving.

In some embodiments in the present disclosure, the battery 10 may be used not only as the operating power supply of the vehicle 100, but also as a driving power supply of the vehicle 100, instead of, or partially instead of, fuel or natural gas, to provide driving power for the vehicle 100.

In the present disclosure, the battery includes a plurality of battery cells. A battery cell is a fundamental unit capable of achieving conversion between chemical energy and electrical energy, and can be used to manufacture a battery module or a battery pack, so as to supply power to an electrical device. A battery cell may be a secondary battery, a secondary battery is a battery cell that may be continuously used by activating an active material by means of charging the battery cell after the battery cell is discharged. The battery cell may be a lithium ion battery, a sodium ion battery, a sodium-lithium ion battery, a lithium metal battery, a sodium metal battery, a lithium-sulfur battery, a magnesium ion battery, a nickel-hydrogen battery, a nickel-cadmium battery, a lead-acid battery, or the like, which is not limited in the present disclosure.

The battery cell generally includes an electrode assembly. The electrode assembly includes a positive electrode, a negative electrode, and a spacer. During charging and discharging of the battery cell, intercalation/de-intercalation of active ions (e.g., lithium ions) are enabled at the positive electrode and negative electrode by moving the active ions between the positive electrode and negative electrode. The spacer is arranged between the positive electrode and the negative electrode to prevent the positive and negative electrodes from being short-circuited and to allow active ions to pass therethrough.

In some embodiments, the battery cell further includes an electrolyte that functions to conduct ions between the positive electrode and negative electrode. The type of the electrolyte is not particularly limited in the present disclosure, and may be selected according to a requirement. The electrolyte may be liquid, gel, or solid.

In some embodiments, the battery cell may include a casing. The housing is used to enclose components such as the electrode assembly and the electrolyte. The housing may be a steel casing, an aluminum casing, a plastic casing (e.g., polypropylene), a composite metal casing (e.g., a copper-aluminum composite casing), an aluminum plastic film, or the like.

As an example, the battery cell can be a cylindrical battery cell, a prismatic battery cell, a pouch battery cell, or a battery cell of other shapes. The prismatic battery cell includes a square-casing battery cell, a blade-shaped battery cell, and a polygon prism battery cell, for example, a hexagonal prism battery cell and the like.

In some embodiments, the casing includes an end cap and a housing body. The housing body is disposed with an opening, and the end cap seals the openings to form sealed space for accommodating substances such as the electrode assembly and the electrolyte. The casing body may be provided with one or more openings. One or more end caps may also be provided.

In some embodiments, at least one electrode terminal (also referred to as a "pole") is disposed on the casing, and the electrode terminal is electrically connected to a tab. The electrode terminal may be directly connected to the tab, or may be indirectly connected to the tab through an adapter. The electrode terminal may be disposed on the end cap, or may be disposed on the casing body. In some embodiments, a pressure relief mechanism is disposed on the casing. The pressure relief mechanism is configured to release internal pressure of the battery cell.

In the embodiments of the present disclosure, a battery may also be a single physical module (for example, a battery module or a battery pack) including one or a plurality of battery cells to provide a higher voltage and capacity. When there are a plurality of battery cells, the plurality of battery cells are connected in series, in parallel, or in series-parallel through a busbar.

In the description of the present disclosure, the technical terms "first", "second", "third", "fourth" and the like are used only for distinguishing between different objects, but cannot be construed to indicate or imply relative importance or implicitly indicate the number, specific order, or primary/secondary relationship of indicated technical features. In the description of the present disclosure, "a plurality of" means two or more unless specifically defined otherwise.

Reference to "an embodiment" herein means that a particular feature, structure, or characteristic described with reference to the embodiment can be included in at least one embodiment of the present disclosure. The phrase in various places in the description does not necessarily all refer to the same embodiment, or a separate or alternative embodiment mutually exclusive of other embodiments. It is explicitly and implicitly understood by a person skilled in the art that the embodiments described herein may be combined with other embodiments.

In the description of the present disclosure, the term "and/or" is only an associative relationship for describing associated objects, indicating that three relationships may be present. For example, A and/or B may indicate the following three cases: presence of only A, presence of both A and B, and presence of only B. In addition, the character "/" herein generally indicates that associated objects are in a "or" relationship.
In the description of the embodiments of the present disclosure, for ease of illustration, a direction of an arrow a is defined as "the length direction of a battery cell" and "the length direction of a first wall," a direction of an arrow b is defined as "the width direction of a battery cell" and "the width direction of a first wall", and a direction of an arrow c is defined as "a height direction of a battery cell." A direction of an arrow X is defined as "a height direction of a battery" and "a height direction of a vehicle," a direction indicated by x1 is defined as "top" or "upper," a direction indicated by x2 is defined as "bottom" or "lower," a direction of an arrow Y is defined as "the length direction of a battery" and "the length direction of a vehicle," and a direction of an arrow Z is defined as "the width direction of a battery" and "the width direction of a vehicle."

In the description of the present disclosure, unless otherwise explicitly specified and defined, the technical terms "installed", "connected", "connect", "fixed", and the like are to be understood in a broad sense. For example, the connection may be a fixed connection, a detachable connection, or an integral connection; may refer to a mechanical connection or electrical connection, and may refer to a direct connection, an indirect connection via an intermediate medium, or an internal communication between two elements or interaction between two elements. A person of ordinary skill in the art may understand the specific meanings of the foregoing terms in the present disclosure based on specific situations.

In the description of the present disclosure, unless otherwise expressly specified and limited, the technical term "contact" should be understood in a broad sense, which may refer to direct contact or contact through an intermediate medium layer, and may refer to contact between two elements substantially without interaction force or contact between two elements with interaction force.

The following describes the embodiments of the present disclosure in detail with reference to the accompanying drawings.

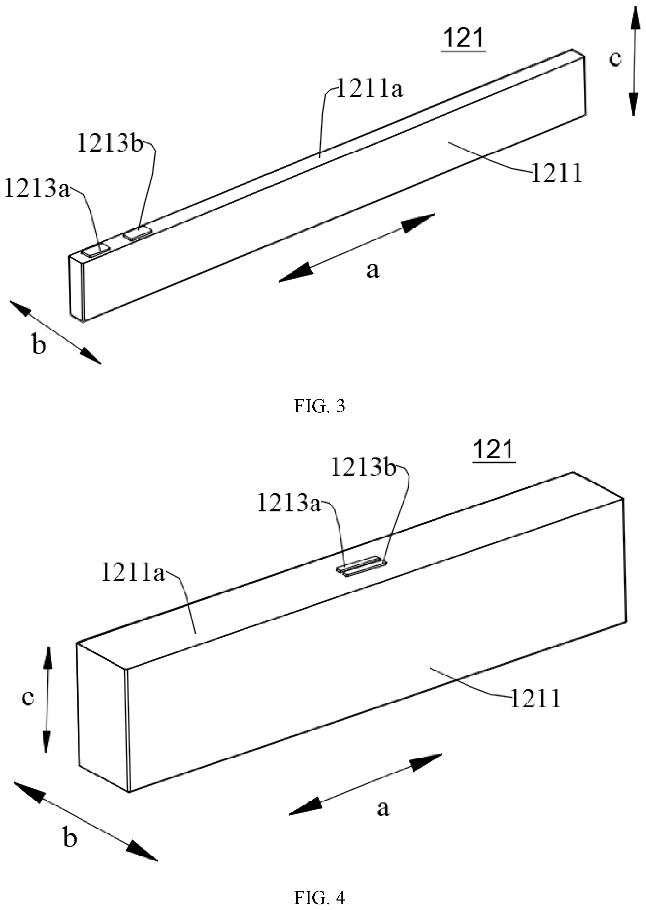

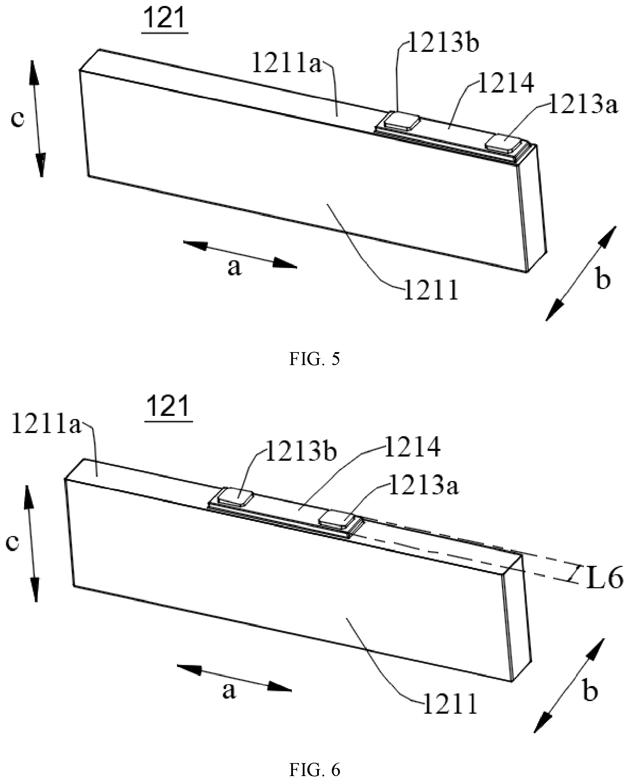

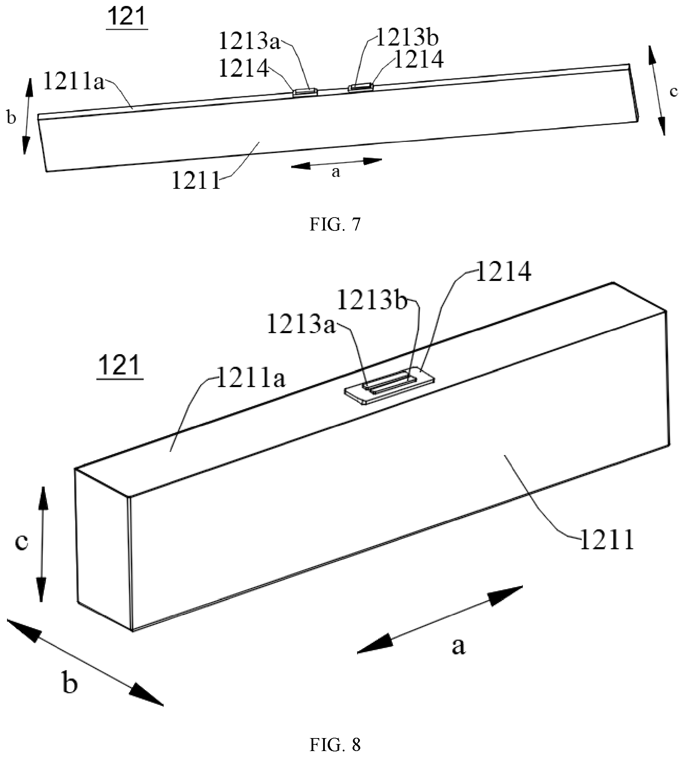

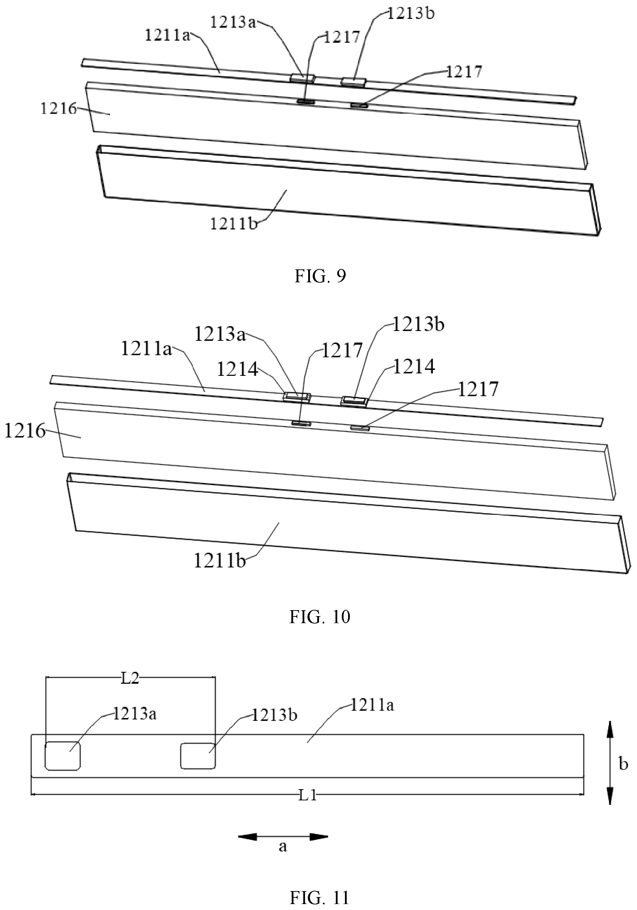

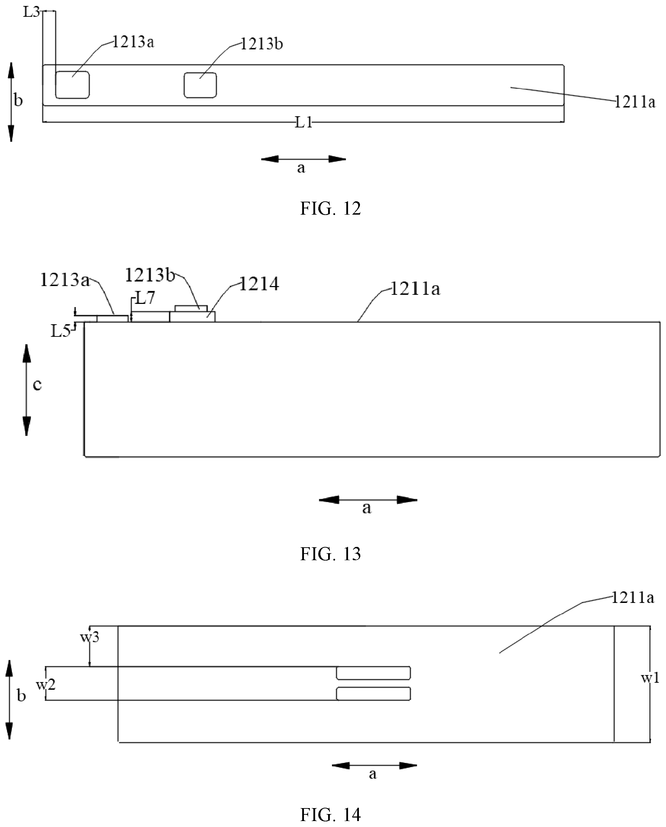

FIG. 1 is a schematic diagram of a structure of a vehicle according to an embodiment of the present disclosure; FIG. 2 is a schematic diagram of a battery cell according to an embodiment of the present disclosure; FIG. 3 is another schematic diagram of a battery cell according to an embodiment of the present disclosure; FIG. 4 is still another schematic diagram of a battery cell according to an embodiment of the present disclosure; FIG. 5 is a schematic diagram of a battery cell with a boss according to an embodiment of the present disclosure; FIG. 6 is another schematic diagram of a battery cell with a boss according to an embodiment of the present disclosure; FIG. 7 is still another schematic diagram of a battery cell with a boss according to an embodiment of the present disclosure; FIG. 8 is yet another schematic diagram of a battery cell with a boss according to an embodiment of the present disclosure; FIG. 9 is an exploded perspective schematic diagram of a battery cell according to an embodiment of the present disclosure; FIG. 10 is an exploded perspective schematic diagram of a battery cell with a boss according to an embodiment of the present disclosure; FIG. 11 is a top view schematic diagram of a battery cell according to an embodiment of the present disclosure; FIG. 12 is another top view schematic diagram of a battery cell according to an embodiment of the present disclosure; FIG. 13 is a front view schematic diagram of a battery cell according to an embodiment of the present disclosure; and FIG. 14 is a top view schematic diagram of a battery cell with a boss according to an embodiment of the present disclosure.

According to some embodiments of the present disclosure, as shown in FIG. 2 to 4, a battery cell 121 includes a casing 1211, a first pole 1213a and a second pole 1213b, the casing 1211 has a first wall 1211a, and the first pole 1213a and the second pole 1213b are disposed on the first wall 1211a. As shown in FIG. 2 to 4, 11 and 14, the first pole 1213a and the second pole 1213b are arranged in a first direction, and in the first direction (namely, an arrangement direction of the poles), the farthest distance between the outer contours of the first pole 1213a and the second pole 1213b is less than one-half the size of the first wall 1211a.

In some embodiments, the casing 1211 is, for example, in a shape of a quadrangular prism, as shown in FIG. 9 and FIG. 10, and includes the first wall 1211a and a housing body 1211b. The housing body 1211b has accommodating space therein, in which an electrode assembly 1216 is accommodated. The electrode assembly 1216 includes tabs 1217, and the tabs 1217 are generally two in number, one being a positive tab and the other being a negative tab. The two tabs 1217 are respectively electrically connected to the first pole 1213a and the second pole 1213b disposed on the first wall 1211a, to allow current to flow between the battery cell and an external electrical apparatus or a charging device.

The first pole 1213a and the second pole 1213b generally have opposite polarities. To be specific, one is a positive pole and the other is a negative pole. The first pole 1213a and the second pole 1213b usually have the same shape, and certainly, this is not limited thereto. The first pole 1213a and the second pole 1213b may also be designed to have different shapes based on application scenarios. In addition, the shapes of the first pole 1213a and the second pole 1213b are not particularly limited, and may be cylindrical, prismatic, or other suitable shapes. The shapes of the first pole 1213a and the second pole 1213b shown in the figures of the present disclosure are merely examples, and may also be other shapes.

As shown in FIG. 2 to 4, 11, and 14, the first pole 1213a and the second pole 1213b are arranged in a certain direction, and the arrangement direction is defined herein as a first direction. As shown in FIG. 2 and 3, the first direction may be a direction consistent with the length direction a of the battery cell, or may be a direction consistent with the width direction b of the battery cell. In addition, the first pole 1213a and the second pole 1213b may be arranged in an aligned manner in the first direction, that is, projections in the first direction completely overlap; or the first pole 1213a and the second pole 1213b may be arranged in the first direction and staggered with respect to each other in a direction perpendicular to the first direction, that is, the projections in the first direction partially overlap or do not overlap. In the present disclosure, as a specific example, the arrangement manner in which the first pole 1213a and the second pole 1213b are aligned in the first direction is taken as an example for description.

In the first direction serving as an arrangement direction, the farthest distance between the outer contours of the first pole 1213a and the second pole 1213b is less than one-half the size of the first wall 1211a. The farthest distance between the outer contours of the first pole 1213a and the second pole 1213b refers to a distance, in the first direction, between a position of the first pole 1213a closest to one side in the first direction and a position of the second pole 1213b closest to the other side in the first direction. In the example shown in FIG. 11, a distance indicated by L2 is the farthest distance between the outer contours of the first pole 1213a and the second pole 1213b. In the example shown in FIG. 14, a distance indicated by W2 is the farthest distance between the outer contours of the first pole 1213a and the second pole 1213b. The size of the first wall 1211a in the first direction refers to the overall length of the first wall 1211a in the first direction (the arrangement direction). In the example shown in FIG. 11, L1 represents the size of the first wall 1211a in the first direction. In the example shown in FIG. 14, W1 represents the size of the first wall 1211a in the first direction.

Further, in the example shown in FIG. 11, the distance indicated by L2 is the farthest distance between the outer contours of the first pole 1213a and the second pole 1213b, L1 represents the size of the first wall 1211a in the first direction, and L1 and L2 satisfy a relationship of L2/L1 being less than 50%. Similarly, in the example shown in FIG. 14, the distance indicated by W2 is the farthest distance between the outer contours of the first pole 1213a and the second pole 1213b, W1 represents the size of the first wall 1211a in the first direction, and W1 and W2 satisfy a relationship of W2/W1 being less than 50%.

Since both the first pole 1213a and the second pole 1213b are disposed on the first wall 1211a, and the farthest distance between the outer contours of the first pole 1213a and the second pole 1213b is less than one-half the size of the first wall 1211a, the first pole 1213a and the second pole 1213b are arranged in a concentrated manner relative to the entire first wall 1211a. Therefore, through cooperation of a two-pole structure, strength of a pole disposition region in the first wall 1211a and even the entire first wall 1211a can be improved, which is beneficial to reducing a risk of deformation of the first wall 1211a. In addition, disposing the first pole 1213a and the second pole 1213b in a concentrated manner is beneficial to fully utilizing other space of the first wall 1211a and centralized handling of the poles and an attached component during processing and maintenance (to be described in detail later).

In some embodiments, as shown in FIG. 11, in the first direction, the farthest distance L2 between the outer contours of the first pole 1213a and the second pole 1213b does not exceed 40% of the size L1 of the first wall 1211a in the first direction.

By setting the farthest distance between the outer contours of the first pole 1213a and the second pole 1213b to not exceed 40% of the overall length size of the first wall, a cooperative effect between the first pole 1213a and the second pole 1213b can be reinforced, which is more beneficial to improving strength of the pole disposition region in the first wall and reducing a risk of bending and deformation.

In some embodiments, as shown in FIG. 12, a distance L3 between the outer contours of the first pole 1213a and the second pole 1213b and an end edge of the first wall 1211a in the first direction is not less than 5% of the size L1 of the first wall 1211a in the first direction.

By limiting the distance between the poles and the end edge of the first wall in the length direction, it is beneficial to improving assembly convenience by utilizing a restraining effect of another wall surface at the end edge.

In some embodiments, as shown in FIG. 12 and 14, the distance between the outer contours of the first pole 1213a and the second pole 1213b and the end edge of the first wall 1211a in the first direction is in the range of 8.75 mm to 600 mm.

In the embodiment shown in FIG. 12, the first direction is consistent with the length direction of the first wall 1211a, and the distance L3 between the outer contours of the first pole 1213a and the second pole 1213b and the end edge of the first wall 1211a in the first direction is in the range of 8.75 mm to 600 mm. Optionally, the distance L3 may be, for example, 8.75 mm, 9 mm, 10 mm, 50 mm, 100 mm, 200 mm, 300 mm, 400 mm, 500 mm, or 600 mm. In the embodiment shown in FIG. 14, the first direction is consistent with the width direction of the first wall 1211a, and a distance W3 between the outer contours of the first pole 1213a and the second pole 1213b and the end edge of the first wall 1211a in the first direction is in the range of 8.75 mm to 600 mm. Optionally, the distance W3 may be, for example, 8.75 mm, 9 mm, 10 mm, 50 mm, 100 mm, 200 mm, 300 mm, 400 mm, 500 mm, or 600 mm.

Accordingly, the poles can be disposed at appropriate positions on the first wall, thereby not only reliably achieving an electrical conduction function, but also providing a reinforcing effect of the first wall.

In some embodiments, as shown in FIG. 11 and 12, the size L1 of the first wall 1211a in the length direction a is greater than or equal to 350 mm.

Optionally, the size L1 of the first wall 1211a in the length direction a may be in the range of 350 mm to 1200 mm.

Further, the size L1 of the first wall 1211a in the length direction a may be in the range of 350 mm to 700 mm. In some embodiments, a battery cell having a length within the range is also referred to as a short-blade battery cell. Specifically, the length size may be 350 mm, 400 mm, 450 mm, 500 mm, 550 mm, 600 mm, 650 mm, or 700 mm.

Further, the size L1 of the first wall 1211a in the length direction a may be in the range of 800 mm to 1200 mm. In some embodiments, a battery cell having a length within the range is also referred to as a long-blade battery cell. Specifically, the length size may be 800 mm, 850 mm, 900 mm, 1000 mm, 1100 mm, or 1200 mm.

By disposing the first pole 1213a and the second pole 1213b in a concentrated manner, it is more beneficial to improving strength of an end cap of a battery having a relatively long length.

In some embodiments, as shown in FIG. 2, 3, 9, and 11 to 13, the first direction is consistent with the length direction a of the first wall 1211a, and the first pole 1213a and the second pole 1213b are arranged spaced apart from each other in the length direction a.

Herein, taking the first wall 1211a of the rectangular casing 1211 as an example, the length direction refers to a direction of the longest one of three mutually perpendicular edges. The width direction refers to a direction perpendicular to the length direction within a surface on which a pole is disposed.

The first pole 1213a and the second pole 1213b are arranged spaced apart from each other in the length direction a. Regarding the size of an interval, a lower limit thereof is at least such that the first pole 1213a and the second pole 1213b are not electrically conductive with each other, and may also be a minimum interval set in consideration of component mounting space, operation space, and the like. An upper limit thereof is required such that the farthest distance between the outer contours of the first pole 1213a and the second pole 1213b is less than one-half the size of the first wall 1211a. As long as the above requirements are satisfied, it can be set based on specific situations.

By disposing the first pole 1213a and the second pole 1213b to be spaced apart in the length direction a within a certain distance range, strength of the pole disposition region in the first wall 1211a can be further improved, which is further beneficial to reducing a risk of deformation of the first wall. In detail, particularly for a long-blade battery, in the length direction a of the first wall 1211a, the first wall 1211a (particularly an electrode disposition region) has a higher risk of deformation or a larger deformation amount. By disposing the first pole 1213a and the second pole 1213b in the length direction in a concentrated manner, it is beneficial to reducing a risk of deformation in the pole disposition region. In addition, larger space may be reserved in the length direction of the first wall, which is beneficial to fully utilizing other space of the first wall.

In some embodiments, as shown in FIG. 4, 7, and 14, the first direction may also be consistent with the width direction b of the first wall 1211a, and the first pole 1213a and the second pole 1213b are arranged spaced apart from each other in the width direction b.

Regarding the magnitude of an interval, similarly, a lower limit thereof is at least such that the first pole 1213a and the second pole 1213b are not electrically conductive with each other, and may also be a minimum interval set in consideration of component mounting space, operation space, and the like. An upper limit thereof is required such that the farthest distance between the outer contours of the first pole 1213a and the second pole 1213b is less than one-half the size of the first wall 1211a. As long as the above requirements are satisfied, it can be set based on specific situations.

By arranging the first pole 1213a and the second pole 1213b in the width direction b, strength of the pole disposition region in the first wall 1211a can be improved, which is beneficial to reducing a risk of deformation of the first wall 1211a. In addition, by disposing the first pole 1213a and the second pole 1213b in the width direction in a concentrated manner, which is more beneficial to fully utilizing other space of the first wall 1211a.

In some embodiments of the battery cell, the first pole 1213a and the second pole 1213b are both disposed on the same side of the first wall 1211a in the first direction, or the first pole 1213a and the second pole 1213b are both disposed at a middle position of the first wall 1211a in the first direction. The first direction may be consistent with the length direction of the first wall 1211a, or may be consistent with the width direction thereof.

In some embodiments, as shown in FIG. 2, 3, 9, and 11 to 13, the first direction is consistent with the length direction a of the first wall 1211a, and the first pole 1213a and the second pole 1213b are both disposed on the same side of the first wall 1211a in the first direction, or the first pole 1213a and the second pole 1213b are both disposed at a middle position of the first wall 1211a in the first direction.

As shown in FIG. 2, the first pole 1213a and the second pole 1213b are both disposed at a middle position of the first wall 1211a in the first direction. For example, the first pole 1213a and the second pole 1213b may be symmetrically disposed with respect to a length centerline (an imaginary line extending in the width direction b at a center in length) of the first wall 1211a, or the first pole 1213a and the second pole 1213b may be disposed asymmetrically but located on two sides of the length centerline. In the example shown in FIG. 2, in the length direction a, a region of the first wall 1211a located on both sides of the first pole 1213a and the second pole 1213b may be used for disposing another component, for example, a pressure relief valve. Certainly, the pressure relief valve may also be disposed in a region between the first pole 1213a and the second pole 1213b, or may be disposed on another wall instead of the first wall 1211a.

As shown in FIG. 3, the first pole 1213a and the second pole 1213b are both disposed on one side of the first wall 1211a in the first direction. For example, the first pole 1213a and the second pole 1213b are both disposed close to an end portion of the first wall 1211a in the length direction a, are both located on one side of the length centerline and disposed close to the length centerline, or are located between the end portion of the first wall 1211a in the length direction a and the above-mentioned length centerline.

In the example shown in FIG. 3, in the length direction a, a region (for example, a non-pole disposition region) of the first wall 1211a located on the other side of the first pole 1213a and the second pole 1213b may be used for arranging another component, for example, a pressure relief valve. Certainly, the pressure relief valve may also be disposed in a region between the first pole 1213a and the second pole 1213b, or may be disposed on another wall instead of the first wall 1211a.

By disposing both the first pole 1213a and the second pole 1213b on one side in the length direction a, strength of the first wall 1211a can be improved and it is beneficial to utilization of another region of the first wall 1211a. In addition, cooperation with another wall surface at an edge may be performed, thereby improving assembly convenience. By disposing the first pole 1213a and the second pole 1213b close to a middle position in the length direction a, a middle region where deformation is more likely to occur can be reinforced, which is beneficial to improving overall strength of the first wall 1211a.

In some embodiments, as shown in FIG. 5 to 8 and FIG. 10, the first wall 1211a has a boss 1214, the boss 1214 protruding from the first wall 1211a in the direction away from the first wall 1211a, and at least one of the first pole 1213a and the second pole 1213b is disposed on the boss 1214.

The boss 1214 is disposed on a surface of the first wall 1211a exposed outside the casing 1211, and the boss 1214 protrudes relative to the first wall 1211a. The boss 1214 may have a same or substantially same width as the first wall 1211a, that is, have a same or substantially same size in the width direction b; or the boss 1214 may be narrower than the first wall 1211a in width. With respect to the size of a contour of the boss 1214, as long as the boss 1214 can support the pole, no particular limitation is imposed on the size of the contour thereof. For example, in the case of viewing the pole and the boss 1214 from the top in the thickness direction of the first wall 1211a, the contour of the pole may extend beyond the contour of the boss 1214, and the contour of the boss 1214 may also extend beyond the contour of the pole. From a perspective of achieving a great reinforcing effect on the first wall 1211a, the contour of the boss 1214 may extend beyond the contour of the pole.

In addition, a shape of the boss 1214 is not particularly limited, and may be the same as or substantially the same as a shape of the pole, or may be different from the shape of the pole. In the examples shown in FIG. 5, 6, and 7, the shape of the boss 1214 is different from the shape of the pole. In addition, the boss 1214 extends in the length direction of the first wall 1211a to form a strip plate shape.

The boss 1214 is, for example, connected to the first wall 1211a by welding. A material of the boss 1214 may be metal or non-metal.

The pole is disposed on the boss 1214. Specifically, the pole penetrates through the boss 1214 and is exposed on a side of the boss 1214 away from the first wall 1211a. Although not shown, the boss 1214 has a through hole for connecting the poles with the tabs 1217.

The first pole 1213a and the second pole 1213b may both be disposed on the boss 1214, or only one of them may be disposed on the boss 1214. In the embodiments of the present disclosure, a case in which both the first pole 1213a and the second pole 1213b are disposed on the boss is taken as an example for description.

It should be noted that, in the embodiments in which the boss 1214 is disposed, the first pole 1213a and the second pole 1213b are still arranged in the first direction, and in the first direction, the farthest distance between the outer contours of the first pole 1213a and the second pole 1213b is less than one-half the size of the first wall 1211a.

By disposing the boss 1214 for the poles, strength of the first wall can be further improved through the boss, thereby reducing a risk of deformation or a deformation amount.

In some embodiments, as shown in FIG. 5, FIG. 6, and FIG. 8, the number of bosses 1214 is one. The boss 1214 is disposed on one side of the first wall 1211a in the first direction, or the boss 1214 is disposed at a middle position of the first wall in the first direction.

Similarly to the disposition of the first pole 1213a and the second pole 1213b, as shown in FIG. 6, the boss 1214 is disposed at a middle position of the first wall 1211a in the first direction, where the first direction is consistent with the length direction a of the first wall 1211a. For example, the boss 1214 may be symmetrically disposed with respect to a length centerline (an imaginary line extending in the width direction b at a center in length) of the first wall 1211a, or may be disposed asymmetrically but located on both sides of the length centerline. In the example shown in FIG. 6, in the length direction a, a region where the boss 1214 is not disposed may be used for disposing another component, for example, a pressure relief valve. Certainly, the pressure relief valve may also be disposed on the boss 1214, or may be disposed on another wall instead of the first wall 1211a.

As shown in FIG. 5, the boss 1214 is disposed on one side of the first wall 1211a in the first direction, where the first direction is consistent with the length direction a of the first wall 1211a. For example, the boss 1214 is disposed close to an end portion of the first wall 1211a in the length direction a, is located on one side of a length centerline and disposed close to the length centerline, or is located between the end portion of the first wall 1211a in the length direction a and the above-mentioned length centerline.

On the boss 1214, either one of the first pole 1213a and the second pole 1213b may be disposed, and the other may be directly disposed on the first wall 1211a. Alternatively, both the first pole 1213a and the second pole 1213b may be disposed on the boss 1214.

By disposing the first pole 1213a and/or the second pole 1213b on one boss 1214, strength of the first wall 1211a can be further improved through cooperation between the boss 1214 and the poles in the length direction.

As shown in FIG. 8, the number of bosses 1214 is one. The boss 1214 is disposed on one side of the first wall 1211a in the first direction (not shown in FIG. 7), or the boss 1214 is disposed at a middle position of the first wall in the first direction, where the first direction is consistent with the width direction b of the casing 1211.

In some embodiments, as shown in FIG. 5 and 6, the first pole 1213a and the second pole 1213b are arranged spaced apart from each other in the length direction of the first wall 1211a on the boss 1214.

In FIG. 5 and FIG. 6, the first pole 1213a and the second pole 1213b are respectively disposed at two end portions of the boss 1214. In some embodiments, the boss 1214 may also be formed to be longer, to be specific, the first pole 1213a and the second pole 1213b may be disposed at positions spaced a certain distance from the two end portions of the boss 1214.

By disposing the first pole 1213a and the second pole 1213b on the same boss 1214 in the length direction a, it is more beneficial to improving strength of the first wall.

In some embodiments, as shown in FIG. 7 and 10, the number of bosses 1214 is two, where one of the bosses 1214 is disposed with the first pole 1213a, and the other boss 1214 is disposed with the second pole 1213b, and the two bosses 1214 are arranged in the first direction.

The first direction may be consistent with the length direction a of the first wall 1211a, or may be consistent with the width direction b. In the embodiments in which the two bosses 1214 are disposed, in the length direction a of the casing 1211 (the first wall 1211a) or in the width direction b of the casing 1211 (the first wall 1211a), the farthest distance between the outer contours of the first pole 1213a and the second pole 1213b disposed on the respective bosses 1214 is less than one half of the overall length of the first wall 1211a.

In some embodiments, in the length direction a of the casing 1211, the farthest distance between outer contours of the two bosses 1214 may be less than one half of the overall length of the first wall 1211a. In other embodiments, in the length direction a of the casing 1211, the farthest distance between the outer contours of the two bosses 1214 may be greater than or equal to one half of the overall length of the first wall 1211a.

By disposing the first pole 1213a and the second pole 1213b on the two respective bosses 1214, flexibility in disposing the bosses 1214 can be improved, and occupation of space by the bosses 1214 can be suppressed.

In some embodiments, as shown in FIG. 7 and 10, the two bosses 1214 are disposed spaced apart from each other close to a middle position of the first wall 1211a, or the two bosses 1214 are disposed on the same side of the first wall 1211a in the first direction.

The first direction may be consistent with the length direction a of the first wall 1211a, or may be consistent with the width direction b. For example, the two bosses 1214 are disposed spaced apart from each other in the length direction a of the casing 1211. In some embodiments, the two bosses 1214 may be symmetrically disposed with respect to the length centerline (an imaginary line extending in the width direction b at a center in length) of the first wall 1211a, or may be disposed asymmetrically but located on two sides of the length centerline. In other embodiments, the two bosses 1214 are both located on one side of the length centerline, for example, close to one end portion of the first wall 1211a in the length direction a.

Through the two bosses 1214 and the poles disposed on the two bosses 1214, strength of the first wall 1211a of the battery can be improved.

In some embodiments, the projection area of the boss 1214 on the first wall 1211a in the thickness direction c of the first wall 1211a accounts for 10% to 30% of the area of the first wall.

By disposing the boss 1214 with an appropriate size, it can balance disposition of the pole, improvement of strength of the first wall, and suppression of space occupation.

In some embodiments, as shown in FIG. 6, a size L6 of the boss 1214 in a second direction does not exceed 500 mm, where in a plane in which the first wall 1211a is located, the second direction is perpendicular to the first direction; and/or as shown in FIG. 13, a height size L7 of the boss 1214 protruding relative to the first wall 1211a does not exceed 300 mm.

For example, the first direction is consistent with the length direction a of the first wall 1211a, and the second direction is consistent with the width direction b of the first wall 1211a. The size L6 of the boss 1214 in the second direction may be 50 mm, 100 mm, 200 mm, 300 mm, 400 mm, or 500 mm. The height size L7 of the boss 1214 protruding relative to the first wall 1211a may be 20 mm, 50 mm, 100 mm, 150 mm, 200 mm, or 300 mm.

By disposing the boss 1214 with an appropriate size, it can balance disposition of the pole, improvement of strength of the first wall, and suppression of space occupation.

In some embodiments, as shown in FIG. 6, the size L6 of the boss 1214 in the second direction is in the range of 100 mm to 400 mm; and/or the height size L7 of the boss 1214 is in the range of 20 mm to 100 mm.

By disposing the boss 1214 with an appropriate size, it can balance disposition of the pole, improvement of strength of the first wall, and suppression of space occupation.

In some embodiments, as shown in FIG. 9 and 10, the first wall 1211a is an end cap of the battery cell. In other embodiments, as shown in FIG. 14, the first wall 1211a is a wall having the largest area of the casing 1211. In still other embodiments, as shown in FIG. 3, the first wall 1211a is a wall of the casing 1211 opposite to an end cap.

Accordingly, the pole can be disposed in the casing 1211 of the battery with greater positional flexibility. Even if a wall of the casing 1211 on which the pole is to be disposed has a relatively high risk of deformation, deformation amount can be reduced by centrally disposing the pole.

A second aspect of the present disclosure provides a battery.

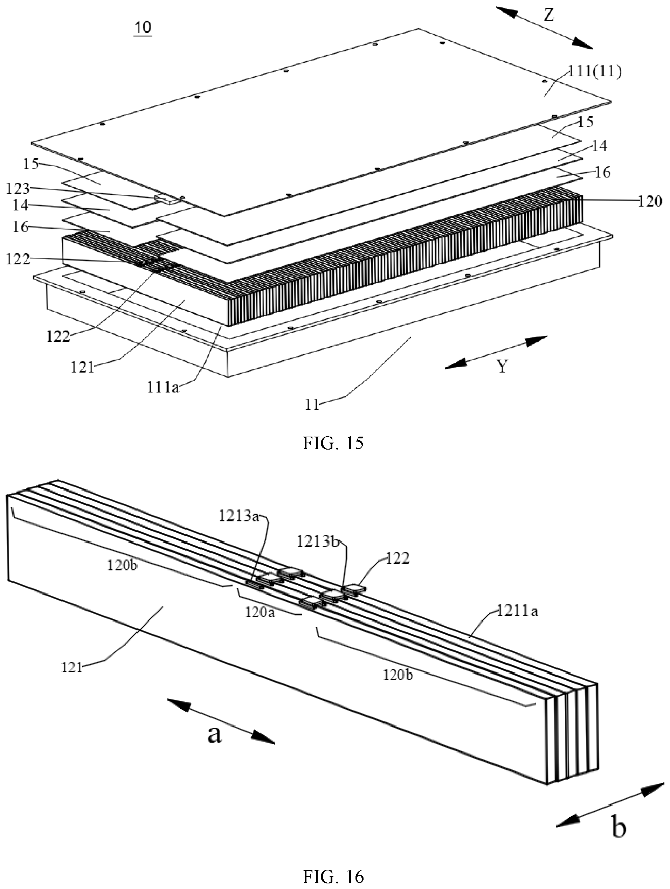

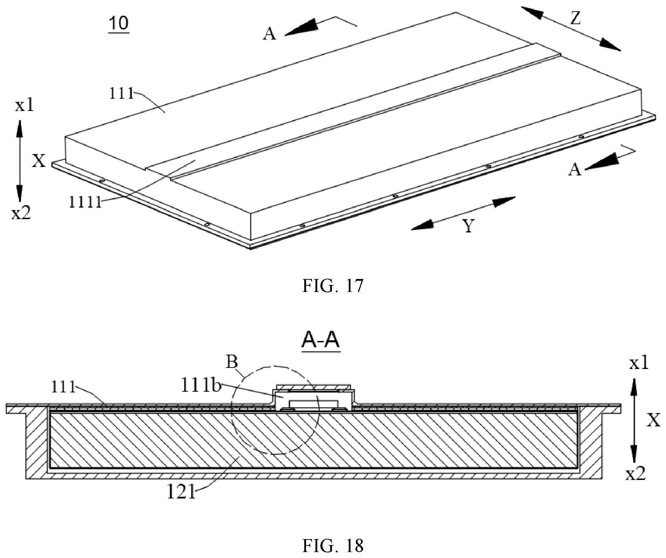

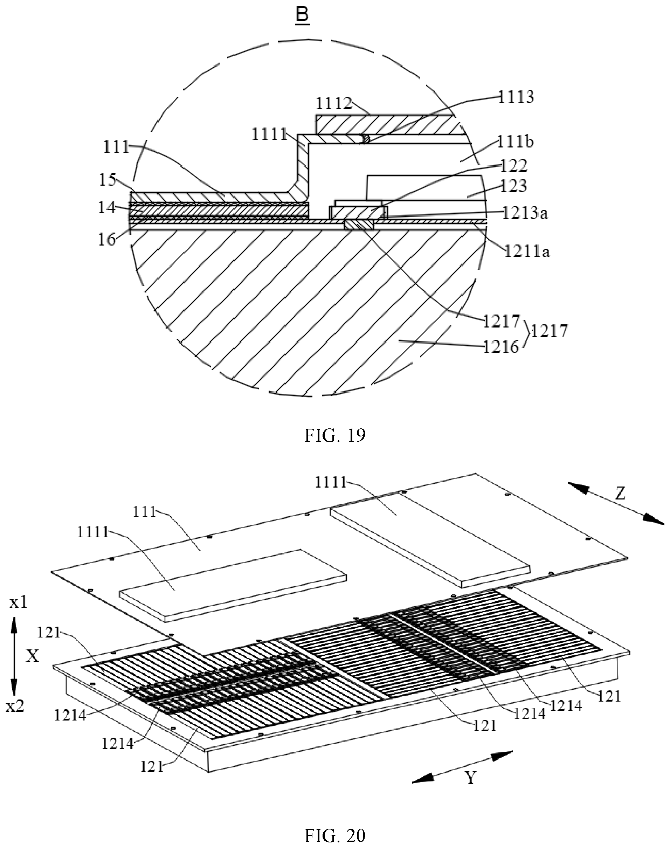

FIG. 15 is an exploded perspective schematic diagram of a battery according to an embodiment of the present disclosure; FIG. 16 is a schematic diagram of a partial structure of the battery shown in FIG. 15; FIG. 17 is another perspective schematic diagram of a battery according to an embodiment of the present disclosure; FIG. 18 is a schematic cross-sectional diagram taken along line A-A in FIG. 17; FIG. 19 is an enlarged schematic diagram of a portion B in FIG. 18; and FIG. 20 is still another exploded perspective schematic diagram of a battery according to an embodiment of the present disclosure.

In some embodiments, as shown in FIG. 15 to 20, a battery 10 includes a casing body 11 and a plurality of battery cells 121.

As shown in FIG. 15, a casing accommodating cavity 111a for accommodating the battery cells 121 and another component is included in the casing body 11. The plurality of battery cells 121 are arranged in a battery cell row and accommodated in the casing accommodating cavity 111a. A casing wall 111 of the casing body 11 closes the casing accommodating cavity 111a. In some cases, the casing wall 111 is implemented by a cover plate. In some embodiments, a heat exchange plate 14 is disposed between the casing wall 111 and the battery cell row. The heat exchange plate 14 may be bonded to surfaces of the battery cells 121 and/or the casing wall 111 facing the battery cells 121. In a specific embodiment, the heat exchange plate 14 is bonded to a surface of the casing wall 111 facing the battery cells 121 through a first adhesive layer 15, and is bonded to a surface (a first wall 1211a) of the battery cell 121 through a second adhesive layer 16.

In some embodiments, as shown in FIG. 15 and 16, the plurality of battery cells 121 in the casing accommodating cavity 111a of the battery 10 are electrically connected to each other through busbars 122. Specifically, the busbar 122 electrically connects a first pole 1213a of one battery cell 121 to a second pole 1213b of another battery cell 121, and the two battery cells 121 may be adjacent to each other.

In addition, a sampling structure and an electrical assembly 123 are further disposed in the casing accommodating cavity 111a of the battery 10.

Therefore, a battery in which a casing 1211 of the battery cells 121 is not prone to deformation or has a relatively small deformation amount can be provided.

In some embodiments, as shown in FIG. 15 and 16, a first direction is consistent with the length direction a of the battery cells, and the plurality of battery cells 121 are arranged in the width direction b of the first wall 1211a such that the first pole 1213a and the second pole 1213b are separately arranged in the width direction b of the first wall.

In some embodiments, the first pole 1213a and the second pole 1213b are electrically connected through the busbar 122. A shape of the busbar 122 is not particularly limited in the present disclosure, as long as a function of electrically connecting the first pole 1213a and the second pole 1213b can be achieved. In FIG. 16, as an example, the busbar 122 is configured in a relatively small plate shape.

Accordingly, the battery cells can be easily grouped, and the first pole 1213a and the second pole 1213b can be easily connected.

In some embodiments, as shown in FIG. 17 to 19, the casing body 11 includes the casing wall 111 facing the first wall 1211a of the battery cell 121, and an accommodating portion 111b is included on a side (for example, in an x2 direction in FIG. 17) of the casing wall 111 facing the first wall 1211a of the battery cell 121. The battery 10 further includes the busbar 122 and the electrical assembly 123, where the busbar 122 is configured to connect one of the first pole 1213a and the second pole 1213b of one battery cell 121 to one of the first pole 1213a and the second pole 1213b of another battery cell 121. The electrical assembly 123 includes at least one of a sampling structure, a battery management system, a relay, and a high-voltage distribution unit. The accommodating portion 111b accommodates at least part of the first pole 1213a, the second pole 1213b, the busbar 122, and the electrical assembly 123.

As shown in FIG. 17 to 19, the busbar 122 is connected above the first pole 1213a and the second pole 1213b (not shown in the figure), and the sampling structure is disposed on the busbar 122. In some embodiments, the electrical assembly 123 may also be disposed. A protruding portion 1111 may be located on the first pole 1213a and the second pole 1213b (not shown in the figure), and a part of the sampling structure extends upward into the accommodating portion 111b. The accommodating portion 111b may be space between the first wall 1211a of the battery cell 121 and the casing wall 111.

Accordingly, by forming the accommodating portion 111b between the casing wall 111 of the battery facing the first wall and the first wall of the battery cell, and accommodating all or part of the poles, the busbar 122, and the electrical assembly 123 in the accommodating portion 111b, the overall volume of the casing body 11 of the battery can be suppressed, which is beneficial to improving overall volume utilization of the casing body 11 of the battery.

In some embodiments of the battery, the casing wall 111 facing the first wall 1211a is disposed with the protruding portion 1111. The protruding portion 1111 protrudes from the casing wall 111 in a direction (in an x1 direction in FIG. 17) away from the battery cell 121, and the accommodating portion 111b includes space on a side (in an x2 direction in FIG. 17) of the protruding portion 111 facing the first wall 1211a.

Accordingly, by disposing the protruding portion 1111 on the casing body 11 of the battery 10 to form the accommodating portion 111b, and accommodating the pole, the busbar 122, the electrical assembly 123, and the like in the accommodating portion 111b, the overall volume of the casing body 11 of the battery can be reduced, which is beneficial to improving overall volume utilization of the casing body 11 of the battery.

In addition, since the first pole 1213a and the second pole 1213b are centrally disposed, it is beneficial to suppressing the width of the protruding portion 1111 in a Z direction.

In some embodiments, as shown in FIG. 15 to 19, the battery 10 further includes a heat exchange assembly, and the heat exchange assembly is disposed on the first wall 1211 of each battery cell 121 and configured to exchange heat with each battery cell 121. In the thickness direction c of the first wall 1211a, projections of the first pole 1213a and the second pole 1213b on the first wall 1211a do not overlap with the projection of the heat exchange assembly on the first wall 1211a.

The heat exchange assembly is configured to exchange heat with the battery cell 121 and may provide a heating function and/or a cooling function. In some embodiments, the heat exchange assembly includes a heat exchange plate 14 having a flow channel inside, where a heat exchange medium flows through the flow channel. The flow channel has an inlet and an outlet, which are separately in communication with a heat exchange medium pipeline. The present disclosure does not impose particular limitations on the heat exchange assembly, and an existing heat exchange assembly of an appropriate size may be used. The heat exchange medium may be, for example, water, ethylene glycol, or the like.

Accordingly, heat exchange can be realized using a region other than a pole disposition region on the first wall 1211a of the battery cell, which is beneficial to suppressing the overall volume of the casing body 11 of the battery and improving volume utilization within the casing body 11 of the battery.

In some embodiments, as shown in FIG. 15 and 16, the first walls 1211a of the plurality of battery cells 121 form a first surface 120. The first surface 120 has a first region 120a and a second region 120b. The first pole 1213a and the second pole 1213b are disposed in the first region 120a, and the heat exchange assembly is disposed in the second region 120b. The number of second regions 120b is two, and the two second regions 120b are respectively located on two sides of the first region 120a.

By arranging the battery cells 121 such that the first pole 1213a and the second pole 1213b are concentrated in the first region 120a, and arranging the heat exchange assemblies on both sides of the first region 120a, it is beneficial to heat exchange with the entire battery cells 121 and further improving strength of the first wall 1211a of the battery cell 121.

In some embodiments, as shown in FIG. 15 and 16, by disposing the first pole 1213a and the second pole 1213b at a middle position in the length direction a of the battery cells 121, and arranging the plurality of such battery cells 121 in the width direction b of the battery cell 121, the first pole 1213a and the second pole 1213b can be concentrated in the first region 120a.

In other embodiments, as shown in FIG. 3 and 5, the first pole 1213a and the second pole 1213b may be disposed on one side in the length direction of the battery cells 121, and the two battery cells 121 are arranged in the length direction a of the battery cell 121 in such a manner that the sides where the first pole 1213a and the second pole 1213b are formed are close to or in contact with each other, thereby forming battery cell units in the length direction a. The battery cell units are then arranged in the width direction b of the battery cells 121, as shown in FIG. 20. Accordingly, the first pole 1213a and the second pole 1213b can be concentrated in the first region 120a.

The battery cells 121 may be arranged close to each other, in contact with each other, or bonded to each other.

In some embodiments, the first walls 1211a of the plurality of battery cells 121 form a first surface 120. The first surface 120 has a first region 120a and a second region 120b. The first pole 1213a and the second pole 1213b are disposed in the first region 120a, the heat exchange assembly is disposed in the second region 120b, the number of first regions 120a is two, and the second region 120b is located between the two first regions 120a.

The first pole 1213a and the second pole 1213b may be disposed on one side in the length direction of the battery cells 121 as shown in FIG. 3 and 5, and the two battery cells 121 are arranged in the length direction a of the battery cells 121 in such a manner that the sides on which the first pole 1213a and the second pole 1213b are formed are spaced apart from each other (the sides without poles are close to or in contact with each other), thereby forming battery cell units in the length direction a. The battery cell units are then arranged in the width direction b of the battery cells 121. Accordingly, a layout configuration is formed in which the poles are located at both sides of the first surface 120. In this way, a relatively large region without a pole can be formed, namely, the second region 120b, and the heat exchange assembly can be disposed in the second region 120b.

By arranging the battery cells 121 such that the first pole 1213a and the second pole 1213b are concentrated on both sides of the second region 120b, and disposing the heat exchange assembly in the second region 120b between the two first regions 120a in which the poles are disposed, it is beneficial to heat exchange with the battery cells, and strength of the first wall of the battery cells can be improved.

In some embodiments, the area of the second region 120b is larger than the area of the first region 120a. Since the farthest distance between the outer contours of the first pole 1213a and the second pole 1213b in the length direction a is less than 50% of the full length of the first wall 1211a of the battery cell, the area of the first region 120a occupied by the poles is smaller than the area of the second region 120b without a pole.

By configuring the first pole 1213a and the second pole 1213b and arranging the battery cells, the second region 120b without a pole can have a larger area, it is beneficial to providing larger disposition space for the heat exchange assembly.

In some embodiments, the heat exchange assembly includes a heat exchange plate 14 and an adhesive layer. The adhesive layer is disposed on a side of the heat exchange plate 14 close to the first wall 1211a, and the heat exchange plate 14 is bonded to the first wall 1211a of the battery cell 121 through the adhesive layer; or the adhesive layer is disposed on a side of the heat exchange plate 14 away from the first wall 1211a, and the heat exchange plate 14 is bonded to the casing wall 111 through the adhesive layer.

As shown in FIG. 15, 18, and 19, in some embodiments, the heat exchange plate 14 is disposed between the casing wall 111 and the battery cell row. The heat exchange plate 14 may be bonded to surfaces of the battery cells 121 and/or the casing wall 111 facing the battery cells 121. In a specific embodiment, the heat exchange plate 14 is bonded to a surface of the casing wall 111 facing the battery cells 121 through a first adhesive layer 15, and is bonded to a surface (the first wall 1211a) of the battery cell 121 through a second adhesive layer 16. In other embodiments, the heat exchange plate 14 is bonded to the surface of the casing wall 111 facing the battery cell 121 through the first adhesive layer 15, or is bonded to the surface (the first wall 1211a) of the battery cell 121 through the second adhesive layer 16.

Since the heat exchange assembly is bonded to the first wall 1211a of the battery cells 121, it is beneficial to improving strength of the first wall 1211a of the battery cell 121 and further reduce a risk of deformation or a deformation amount.

In some embodiments, as shown in FIG. 19, a distance L5 between the top end of the first pole 1213a and the second pole 1213b in the thickness direction c of the first wall 1211a and the first wall 1211a is not less than the height of the heat exchange assembly in the thickness direction of the first wall 1211a.

Since the heat exchange assembly does not exceed the poles in the thickness direction of the first wall 1211a, it is beneficial to suppressing the overall volume of the battery and improving volume utilization of the battery.

In some embodiments, as shown in FIG. 18 and 19, a through hole 1113 is disposed in the casing wall 111 of the casing body 11 facing the first wall 1211a of the battery cell 121. The casing wall 111 disposed with the through hole 1113 is taken as a first casing wall. In the thickness direction of the first casing wall, projections of the first pole 1213a and the second pole 1213b on the first casing wall at least partially fall within the range of the through hole 1113.

In some embodiments, the through hole 1113 is disposed such that the projections of the first pole 1213a and the second pole 1213b on the first casing wall partially fall within the range of the through hole 1113. In other embodiments, the through hole 1113 is disposed such that the projections of the first pole 1213a and the second pole 1213b on the first casing wall completely fall within the range of the through hole 1113.

Since the first pole 1213a and the second pole 1213b are disposed in a concentrated manner, by disposing the through hole 1113 in the first casing wall, operations such as inspection and maintenance of the first pole 1213a and the second pole 1213b can be easily performed. Since the first pole 1213a and the second pole 1213b are disposed in a concentrated manner, it is beneficial to suppressing an opening size of the through hole 1113.

In some embodiments, as shown in FIG. 18 and 19, the first casing wall is disposed with the protruding portion 1111 protruding in the direction away from the battery cell 121, the through hole 1113 is disposed in the protruding portion 1111, and the protruding portion 1111 is integrally disposed with the first casing wall, or is detachably disposed relative to the first casing wall.

The protruding portion 1111 may be integrally formed by raising a local portion of the first casing wall. Alternatively, the protruding portion 1111 may be formed by connecting an annular vertical plate around the through hole 1113 disposed in the first casing wall, where a connection manner may be welding, detachable snap-fitting, or the like.

The length size of the protruding portion 1111 in the length direction is not greater than 500 mm. Optionally, the length size may be selected within the range of 50 mm to 300 mm. For example, the length size may be 50 mm, 100 mm, 150 mm, 200 mm, 250 mm, 300 mm, 350 mm, 400 mm, 450 mm, 500 mm.

Since the first casing wall is disposed with the protruding portion 1111 and the through hole 1113 is disposed in the protruding portion 1111, operations such as inspection and maintenance can be performed on the first pole 1213a, the second pole 1213b, and another component extending into the protruding portion 1111 through the through hole 1113.

In some embodiments, the battery further includes a closing cover 1112 for closing the through hole 1113.

The closing cover 1112 is, for example, configured as a flat plate and is connected to the protruding portion 1111 in a manner that allows opening and closing relative to the through hole 1113, such as by hinging or snap-fitting.

In addition, in FIG. 19, the through hole 1113 is disposed in the protruding portion 1111. In a case in which the protruding portion 1111 is not disposed and the through hole is disposed in the casing wall 111, the through hole 1113 refers to a through hole disposed in a plate-shaped casing wall 111.

Accordingly, when the through hole 1113 is not in use, it can be closed by the closing cover 1112, to prevent foreign substances or the like from entering the casing body 11 of the battery.

In some embodiments, the battery further includes the busbar 122 and the electrical assembly 123, where the busbar 122 is configured to connect one of the first pole 1213a and the second pole 1213b of one battery cell 121 to one of the first pole 1213a and the second pole 1213b of another battery cell 121, and the electrical assembly 123 includes at least one of the sampling structure, the battery management system, the relay, and the high-voltage distribution unit. In the thickness direction of the first casing wall, projections of the busbar 122 and the electrical assembly 123 on the first casing wall at least partially fall within the range of the through hole 1113.

By disposing the protruding portion 1111 on the casing body 11 of the battery to form the accommodating portion 111b, and accommodating the poles, the busbar 122, the electrical assembly 123, and the like in the accommodating portion 111b, it is not only beneficial to suppressing the overall volume of the casing body 11 of the battery and improving overall volume utilization of the casing body 11 of the battery, but also beneficial to performing operations such as inspection and maintenance on more components through the through hole 1113.

A third aspect of the present disclosure provides an electrical apparatus, and the electrical apparatus includes a plurality of battery cells 121 provided in the above first aspect, or the battery 10 provided in the above second aspect, where the battery cells 121 or the battery 10 serve as a power supply of the electrical apparatus.

Accordingly, an electrical apparatus disposed with the battery cells 121 having a casing 1211 that is not prone to deformation or has a relatively small deformation amount can be provided, which is beneficial to reducing maintenance time.

FIG. 21 is a schematic diagram of a structure of a seat and a battery in a vehicle according to an embodiment of the present disclosure. As shown in FIG. 1 and 21, in some embodiments, the electrical apparatus includes a vehicle 100.

In some embodiments, the battery 10 is mounted at a lower portion of the vehicle 100. As shown in FIG. 21, seats 20 are disposed in a passenger compartment of the vehicle 100, and the battery 10 is mounted below the seats 20. In some embodiments, a vehicle body floor is disposed between the battery 10 and the seats 20. In some other embodiments, the seats 20 are directly disposed on the battery 10.

Accordingly, a vehicle disposed with the battery having the battery cells 121 with the casing 1211 that is not prone to deformation or has a relatively small deformation amount can be provided, which is beneficial to reducing maintenance time.

A fourth aspect of the present disclosure provides an energy storage apparatus.

FIG. 22 is a schematic diagram of a structure of an energy storage apparatus according to an embodiment of the present disclosure. As shown in FIG. 22, the energy storage apparatus includes a plurality of battery cells 121 provided in the above first aspect, or the battery 10 provided in the above second aspect, where the battery cells 121 or the battery 10 are configured to store electrical energy and provide electrical energy.

In some embodiments, as shown in FIG. 11, the energy storage apparatus 200 includes a bracket 201, and the battery 10 is placed on the bracket 201.

Accordingly, the energy storage apparatus 200 disposed with the battery having the battery cells 121 with the casing 1211 that is not prone to deformation or has a relatively small deformation amount can be provided, which is beneficial to reducing maintenance time.

The examples or embodiments provided in the present disclosure may be combined with each other without conflict.

The above descriptions are merely preferable embodiments of the present disclosure, and are not intended to limit the present disclosure. For a person skilled in the art, various modifications and changes may be made to the present disclosure. Any modification, equivalent replacement, or improvement made without departing from the spirit and principle of the present disclosure shall fall within the protection scope of the present disclosure.

### INDUSTRIAL APPLICABILITY

The present disclosure provides a battery cell, a battery, an electrical apparatus, and an energy storage apparatus, which can improve strength of a casing of the battery. In the battery cell, since a first pole and a second pole are both disposed on a first wall, and the farthest distance between the outer contours of the first pole and the second pole is less than one-half the size of the first wall, the first pole and the second pole are disposed in a concentrated manner relative to the entire first wall. Thus, through mutual cooperation of the two-pole structure, strength of a pole disposition region in the first wall and even the entire first wall can be improved, which is beneficial to reducing a risk of deformation of the first wall. In addition, by disposing the first pole and the second pole in a concentrated manner, it is beneficial to fully utilizing other space of the first wall and processing the pole and an attached component in a concentrated manner during manufacturing and maintenance.

## Claims

1. A battery cell, comprising:
a casing, having a first wall;
and a first pole and a second pole, which are disposed on the first wall, wherein
the first pole and the second pole are arranged in a first direction, and
in the first direction, the farthest distance between the outer contours of the first pole and the second pole is less than one-half the size of the first wall.

2. The battery cell according to claim 1, wherein
in the first direction, the farthest distance between the outer contours of the first pole and the second pole does not exceed 40% of the size of the first wall.

3. The battery cell according to claim 1 or 2, wherein
the first direction is consistent with the length direction of the first wall, and
the first pole and the second pole are arranged spaced apart from each other in the length direction.

4. The battery cell according to claim 1 or 2, wherein
the first direction is consistent with the width direction of the first wall, and
the first pole and the second pole are arranged spaced apart from each other in the width direction.

5. The battery cell according to any one of claims 1 to 4, wherein
the first pole and the second pole are both disposed on the same side of the first wall in the first direction, or
the first pole and the second pole are both disposed close to a middle position of the first wall in the first direction.

6. The battery cell according to any one of claims 1 to 5, wherein
the first wall has a boss, the boss protruding relative to the first wall in the direction away from the first wall, and
at least one of the first pole and the second pole is disposed on the boss.

7. The battery cell according to claim 6, wherein
the number of bosses is one; and
the boss is disposed on one side of the first wall in the first direction, or
the boss is disposed at a middle position of the first wall in the first direction.

8. The battery cell according to claim 6, wherein
the number of bosses is two, one of the bosses is disposed with the first pole, the other is disposed with the second pole, and the two bosses are arranged in the first direction.

9. The battery cell according to claim 8, wherein
the two bosses are disposed spaced apart from each other close to a middle position of the first wall, or
the two bosses are disposed on the same side of the first wall in the first direction.

10. The battery cell according to any one of claims 6 to 9, wherein
the projection area of the boss on the first wall in the thickness direction of the first wall accounts for 10% to 30% of the area of the first wall.

11. The battery cell according to any one of claims 6 to 10, wherein
the size of the boss in a second direction does not exceed 500 mm, wherein in a plane in which the first wall is located, the second direction is perpendicular to the first direction; and/or
the protruding height size of the boss relative to the first wall does not exceed 300 mm.

12. The battery cell according to claim 11, wherein
the size of the boss in the second direction is in the range of 100 mm to 400 mm; and/or
the height size of the boss is in the range of 20 mm to 100 mm.

13. The battery cell according to any one of claims 1 to 12, wherein
the size of the first wall in the length direction is greater than or equal to 350 mm.

14. The battery cell according to any one of claims 1 to 13, wherein
the distance between the outer contours of the first pole and the second pole and an end edge of the first wall in the first direction is not less than 5% of the size of the first wall in the first direction.

15. The battery cell according to any one of claims 1 to 14, wherein
the distance between the outer contours of the first pole and the second pole and the end edge of the first wall in the first direction is in the range of 8.75 mm to 600 mm.

16. The battery cell according to any one of claims 1 to 15, wherein
the first wall is an end cap of the battery cell; or
the first wall is a wall having the largest area of the casing; or
the first wall is a wall of the casing opposite to an end cap.

17. A battery, comprising:
a casing body; and
a plurality of battery cells according to any one of claims 1 to 16.

18. The battery according to claim 17, wherein
a first direction is consistent with the length direction of the battery cell, and
the plurality of battery cells are arranged in the width direction of a first wall such that a first pole and a second pole are separately arranged in the width direction of the first wall.

19. The battery according to claim 17 or 18, wherein
the casing body comprises a casing wall facing the first wall, and an accommodating portion is formed at the side of the casing wall facing the first wall; and
the battery further comprises a busbar and an electrical assembly, wherein
the busbar is configured to connect one of the first pole and the second pole of one battery cell to one of the first pole and the second pole of another battery cell,
the electrical assembly comprises at least one of a sampling structure, a battery management system, a relay, and a high-voltage distribution unit, and
the accommodating portion accommodates at least part of the first pole, the second pole, the busbar, and the electrical assembly.

20. The battery according to claim 19, wherein
a protruding portion is disposed on the casing wall facing the first wall, wherein the protruding portion protrudes from the casing wall in the direction away from the first wall, and the accommodating portion comprises space at the side of the protruding portion facing the first wall.

21. The battery according to any one of claims 17 to 20, wherein
the battery further comprises a heat exchange assembly, and the heat exchange assembly is disposed on the first wall of each battery cell, and is configured to exchange heat with each battery cell; and
in the thickness direction of the first wall, projections of the first pole and the second pole on the first wall do not overlap with the projection of the heat exchange assembly on the first wall.

22. The battery according to claim 21, wherein
the first walls of the plurality of battery cells form a first surface, wherein
the first surface has a first region and a second region, wherein the first pole and the second pole are disposed in the first region, and the heat exchange assembly is disposed in the second region, and
the number of second regions is two, wherein the two second regions are respectively located at two sides of the first region.

23. The battery according to claim 21, wherein
the first walls of the plurality of battery cells form a first surface, wherein
the first surface has a first region and a second region, wherein the first pole and the second pole are disposed in the first region, and the heat exchange assembly is disposed in the second region, and
the number of first regions is two, wherein the second region is located between the two first regions.

24. The battery according to claim 22 or 23, wherein
the area of the second region is greater than the area of the first region.

25. The battery according to any one of claims 21 to 24, wherein
the heat exchange assembly comprises:
a heat exchange plate; and
an adhesive layer, disposed on the side of the heat exchange plate close to the first wall, wherein the heat exchange plate is bonded to the first wall of the battery cell through the adhesive layer, and/or disposed on the side of the heat exchange plate away from the first wall, wherein the heat exchange plate is bonded to the casing wall through the adhesive layer.

26. The battery according to any one of claims 21 to 25, wherein
the distance between the top end of the first pole and the second pole in the thickness direction of the first wall and the first wall is not less than the height of the heat exchange assembly in the thickness direction of the first wall.

27. The battery according to any one of claims 17 to 26, wherein
a through hole is disposed in the casing wall of the casing body facing the first wall of the battery cell, wherein
the casing wall disposed with the through hole is used as a first casing wall, and in the thickness direction of the first casing wall, projections of the first pole and the second pole on the first casing wall at least partially fall within the range of the through hole.

28. The battery according to claim 27, wherein
the protruding portion, protruding in the direction away from the battery cell is disposed on the first casing wall, and the through hole is disposed in the protruding portion, wherein
the protruding portion is integrally formed with the first casing wall, or detachably formed relative to the first casing wall.

29. The battery according to claim 27 or 28, wherein
the battery further comprises a closing cover configured to close the through hole.

30. The battery according to any one of claims 27 to 29, wherein
the battery further comprises the busbar and the electrical assembly, wherein
the busbar is configured to connect one of the first pole and the second pole of one battery cell to one of the first pole and the second pole of another battery cell,
the electrical assembly comprises at least one of the sampling structure, the battery management system, the relay, and the high-voltage distribution unit, and
in the thickness direction of the first casing wall, the projections of the busbar and the electrical assembly on the first casing wall at least partially fall within the range of the through hole.

31. An electrical apparatus, comprising a plurality of battery cells according to any one of claims 1 to 16, or the battery according to any one of claims 17 to 30, wherein the battery cell or the battery serves as a power supply of a vehicle.

32. An electrical apparatus according to claim 31, comprising a vehicle.

33. An energy storage apparatus, wherein the energy storage apparatus comprises a plurality of battery cells according to any one of claims 1 to 16, or the battery according to any one of claims 17 to 30, and the battery cell or the battery is configured to be capable of storing electrical energy and capable of supplying electrical energy.
